# EUROPEAN PATENT APPLICATION

(11) **EP 4 520 616 A1**
(43) Date of publication of application: **12.03.2025**
(21) Application number: 23382915.9
(22) Date of filing: 07.09.2023
(51) Int. Cl.: B61D 33/00, B61D 37/00, A47B 83/02, B62H 3/04

(54) **MODULAR SYSTEM FOR VERSATILE VIS A VIS OR INDIVIDUAL SEATS WITH INTEGRATED BICYCLE HOLDERS**

(71) Applicant: Siemens Mobility GmbH, 81739 München (DE)
(72) Inventor: Rodriguez Campo, Carlos, 28430 Alpedrete (ES)

(57) **Abstract**

The present invention proposes a modular system and a corresponding method, wherein the modular system comprises:
- a foldable seat (110);
- a table (120);
characterized in that
- the foldable seat (110) is foldable under the table (120) by rotation around a main axis (130) of rotation and is characterized by two positions, namely an open position and a closed position, wherein in the closed position, the foldable seat (110) is folded under the table (120), and in its open position, the foldable seat (110) extends along an edge (121) of the table (120) to offer a seated position at said table (120).

## Description

The present invention concerns a modular system for a public transport enabling to easily create a space for passengers and/or for objects transported by passengers, and a method therefore.

Modular systems in public transport are very convenient: they provide a modular space that can be easily adapted or adjusted to the needs of passengers. In particular, in the context of developing sustainable ways to move from one point to another, modular systems comprising notably foldable seats have shown a great flexibility in that they can easily free space for objects carried by passengers, like an individual transporting means (such as a bicycle, a scooter, etc.) or a baggage, or any other cumbersome object, making it possible to easily combine for instance a bike displacement and a public transport displacement. Said public transport might be for instance a train, a metro, a bus, a boat, or any other means for carrying passengers. A foldable seat enables for instance passengers to take their bicycle with them when travelling from a first location to another location, wherein travelling by bicycle and travelling by public transport are for instance combined during a same ride.

One problematic in this context is to develop a modular system that can be easily adapted to the carriage of baggage or objects (e.g. skis, snowboards, bicycles, stroller, etc.) by the passengers. Indeed, some objects, like for instance a bicycle, can quickly become a cumbersome object if an appropriate space in not provided in the public transport. Another problematic is that the space that is assigned, within the public transport, to the transportation of such objects reduces the space available for passenger seats, and therefore, the more objects allocated spaces, the less seats for passengers. Finally, to prevent objects theft, it is highly appreciated by passengers to be close to their object.

Different solutions have been developed for carrying (cumbersome) passenger objects (e.g. bikes, luggage, scooters, etc.) within public transports. For instance, in the case of bicycles, the public transport, e.g. a train, may comprise bicycle racks along some of its sidewalls which allow storing or suspending bicycles in a vertical state according to the length of the bicycle or skis during the winter season. An advantage of such a solution is that hanging a bicycle in such a vertical state spares space compared to holding a bicycle in a riding state. However, a disadvantage is that it requires extra effort to suspend the bike in such a vertical state and it even may become a difficult operation depending on the bike type and weight. Another disadvantage of known in the art bike holders is that the bike is usually located at a remote location, in an exclusive bike space, with respect to the seating place of the bike rider which becomes a problem when the public transport is crowded, and the bike rider needs first to pick up the bike before leaving the public transport. In order to avoid such situations, other solutions proposed to integrate, within a same space, seats for passengers and bicycle retainers or racks, so that passenger seats and bikes cohabit within a same space. However, the existing solutions are not yet optimal or practical, requiring for instance the bike to be hanging high, or limiting the access to said bike or to passenger seats, requiring for instance to remove one suspended bike for accessing another one, or preventing passengers to have a window view, etc.

An objective of the present invention is to propose a flexible and versatile system and method that enable to easily create or free up space in a public transport to meet passenger needs, while enabling to propose, within said space, seating places for passengers, and optionally, means for holding an object or item carried by the passenger, like a bicycle, in a modular way, so that it can easily be adapted for matching the needs of passengers travelling with a cumbersome object (i.e. whose size is typically bigger than the maximal size defined for a hand baggage in a conventional airliner).

This objective is achieved by the measures taken in accordance with the independent claims. Further advantageous embodiments are proposed by the dependent claims.

The concept of the present invention is based on a modular system for versatile vis a vis or individual seats which may integrate holding means (e.g. a bicycle or luggage or ski holder, or a belt system capable of maintaining for instance a stroller) for holding an object accompanying or carried by the passenger, like a bicycle. Said concept will be better understood in the following description.

The present invention concerns more precisely a system configured for being installed in a public transport, said system being preferentially further configured for hanging or holding at least one object, e.g. a bicycle, said system comprising:
- a table;
- a foldable seat;
   wherein
- the foldable seat is foldable under the table by rotation around a main axis of rotation. Preferentially, said main axis of rotation is a vertical axis of rotation;
- optionally, the foldable seat comprises or integrates an object holder for holding or maintaining an object (e.g. a bike, a baggage, a snowboard, a scooter, a pair of skis, etc.) in a predefined position during a motion of the public transport. Said object holder is for instance a belt maintaining system; or a bicycle holder comprising for instance a bicycle holding element - hereafter called "BHE" - (e.g. a hook) and a wheel receptacle or tray, the latter preferentially extending vertically; or a gripping system. In particular, said BHE and said receptacle might be configured for cooperating together for receiving and guiding a wheel of the bicycle. According to the present invention, the object holder, e.g. said BHE and the receptacle with which it cooperates, is preferentially part of the foldable seat and is therefore configured for rotating with the latter, i.e. for being driven into rotation by the foldable seat rotational motion;
- the foldable seat is characterized by two positions, namely an open position and a closed position, wherein in the closed position, the seat is folded under the table and preferentially configured, when folded under the table, for providing access to the object holder for holding said object, e.g. by providing access to the BHE and wheel receptacle for maintaining the bicycle by one of its wheels, and, in its open position, the seat is configured for extending, notably according to its length, along an edge of the horizontally positioned table to offer a seated position at said table. In particular, a passenger sitting, according to said seated position, on a seating place of the foldable seat, is sitting in front of said table edge when the table is horizontal and the foldable seat in the open position, i.e. said seated position is so configured that said length according to which the foldable seat extends is perpendicular to the sagittal plane of the passenger sitting on the seating place according to said seated position. Preferentially, the BHE and wheel receptacle are configured for maintaining or holding said bicycle in a riding state (i.e. substantially horizontal with respect to its length), wherein the bicycle is in a position wherein a first wheel is supported or hold by said BHE and guided by said receptacle and its second wheel is supported by a public transport floor. Preferentially, in its open position, the foldable seat is configured for preventing hanging or holding said object to the object holder. For instance, it may prevent hanging a bicycle to said BHE.

According to another aspect of the present invention, a method for freeing a space in a public transport, for instance for enabling hanging a bicycle in said public transport, is presented, said method comprising:
- folding a foldable seat, by rotation around a main axis of rotation, from an open position, wherein the foldable seat extends along an edge of the table positioned horizontally in order to offer a seated position at said table, to a closed position, wherein said foldable seat is located under said table for freeing said space. For instance, the free space created by folding the foldable seat is configured for providing access to said BHE and wheel receptacle for maintaining a bicycle by one of its wheels.

Finally, the present invention concerns also a public transport comprising the system according to the invention.

Further aspects of the present invention will be better understood through the following drawings, wherein like numbers designate like objects:
- Figure 1: schematic illustration of a preferred embodiment of the system according to the invention, wherein a) and b) represent a top view of said system with the foldable seat in the open position (a) and in a closed position (b), and c) represents a front view of said system;
- Figure 2: flowchart of a preferred embodiment of a method according to the invention;
- Figure 3: 3D illustration of another preferred embodiment of the system according to the invention with foldable seats in the open position;
- Figure 4: 3D illustration of said another preferred embodiment of the system according to the invention with foldable seats in the closed position;
- Figure 5: 3D illustration of said another preferred embodiment of the system according to the invention with foldable seats in a partially open position;
- Figure 6: Top view of a preferred embodiment of the system according to the invention with foldable seats in closed position and bicycles maintained by the BHE;
- Figure 7: Side view of the embodiment according to Fig. 6;
- Figure 8: Top view of a series of preferred embodiments of the system according to the invention installed in a public transport;
- Figure 9: 3D details of a preferred embodiment of the BHE and receptacle according to the invention for a foldable seat in closed position (a) and in open position (b);
- Figure 10: 3D details of a preferred embodiment of an additional BHE and receptacle according to the invention, in operation hanging a bicycle (a) and free of any bicycle (b).

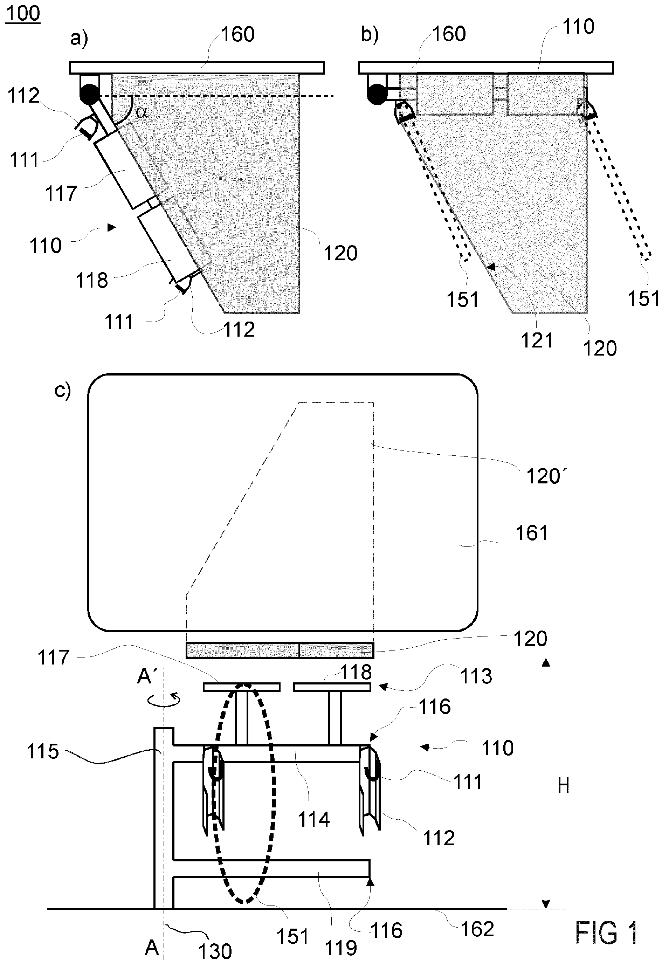

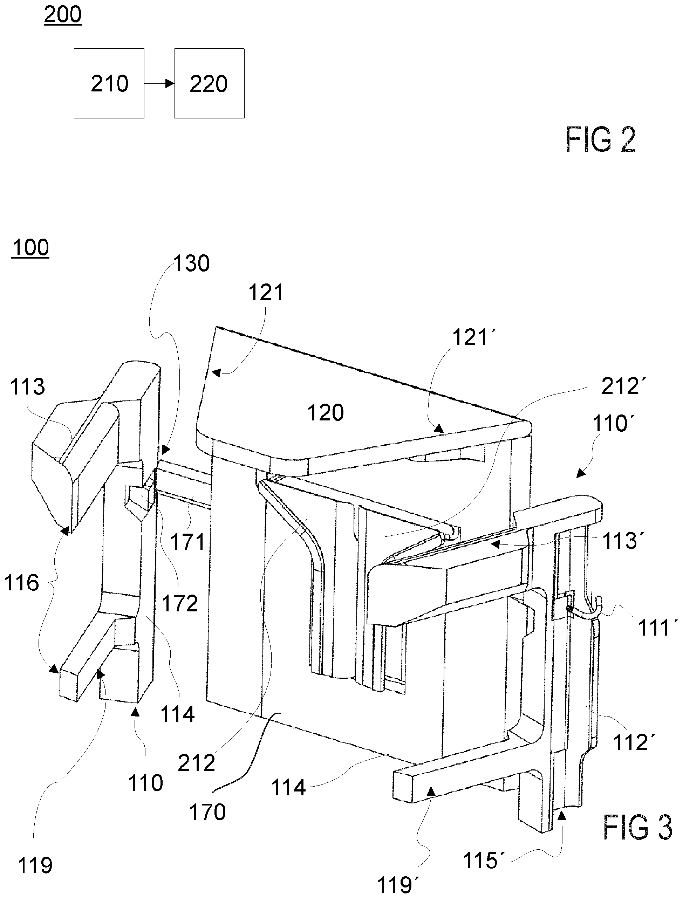

Figure 1 shows the general concept of the present invention. It concerns a system 100, configured for being installed in a public transport, and that comprises a foldable seat 110 and a table 120, and which enables, by folding said foldable seat, to create or free a space that is particularly convenient for hanging or maintaining at least one object in a predefined position with respect to said system or said foldable seat 110. As shown then in Figures 3-5, the system 100 according to the invention may comprise more than one foldable seat 110, preferentially two foldable seats. In the following, the example of a bicycle as being said object maintained or hanging to the foldable seat will be taken, but the system might be adapted for holding or maintaining any other kind of objects. Therefore, the preferred embodiment of the system according to the invention illustrated by the Figures 1-10 is particularly adapted for maintaining at least one bicycle in a public transport. In particular, said system 100 enables to hold said bicycle by one of its wheels 151. Said wheel 151 is schematically represented with dashed lines in Fig. 1b and 1c.

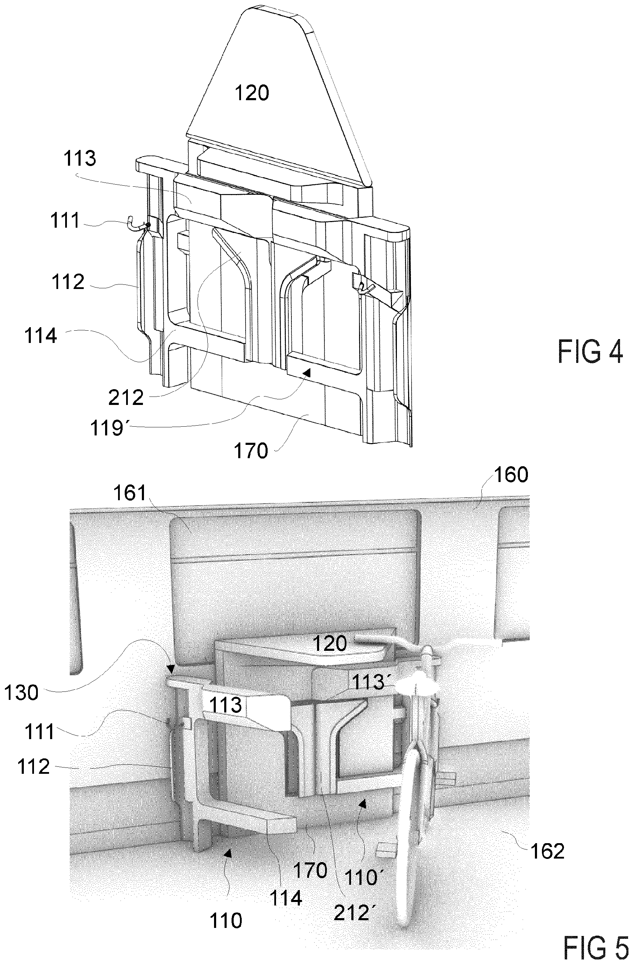

Figures 1a and 1b present each a top view of the system 100 according to the invention, wherein the foldable seat 110 is represented in an open position in Fig. 1a and in a closed position in Fig. 1b. Figure 1c presents a front view of the system 100 according to the invention, i.e. a view in the direction of a wall 160, typically a sidewall, of the public transport against which the system 100 might be installed. The table 120 is preferentially installed in front of a window 161 of said wall 160. In particular, said table 120 might be foldable by rotation around a horizontal axis (not shown), so that it can be moved from a horizontal position to a substantially vertical or high position as represented by the dashed line 120' in Fig. 1c or as illustrated in Fig. 4. This advantageously enables to further free space for cumbersome objects to be maintained or hold by the system according to the invention, like a bicycle.

The foldable seat 110 according to the invention might be folded under the table 120 by rotation around a main axis AA' 130 of rotation so that, in the closed position, seating places 117, 118 be located underneath the table 120, in particular when the latter is in its horizontal position. Said main axis of rotation 130 is preferentially a vertical axis of rotation which enables to design a compact system according to the invention. Of course, other inclinations of said main axis (with respect for instance to the floor of the public transport) are possible, as long as a motion of the foldable seat 110 from a position underneath the table 120 (said closed position) to a position wherein a length of the foldable seat is parallel to an edge of the table 120 so as to create a seating place 117, 118 wherein a passenger sitting at said seating place is facing said edge (i.e. said open position) is ensured. Preferentially, said main axis is not parallel to the table 120. In particular, the motion of the foldable seat is preferentially a swinging motion around said main axis when moving from the open to the closed position and vice versa, wherein an angle defined between a plane defined by an upper surface of the seating place 117, 118 wherein the passenger has to seat and a horizontal plane defined by an upper surface of the table 120 when it is in its horizontal position is substantially constant or the same at the open position and the closed position, and optionally when moving from the open position to the closed position and vice versa. In particular, when folding the foldable seat, said upper surface of the seating place 117, 118 preferentially remains at a same height compared to the height H of the table 120. In the closed position, said length of the foldable seat 110 is preferentially parallel to the public transport wall against which the system according to the invention might be installed, while in said open position, said length of the foldable seat defines an angle α with respect to said wall (see Fig. 1a) so as to be parallel to said edge of the table 120. Said foldable seat length extends thus across the width of the seating place(s) of the foldable seat 110.

According to the present invention, the foldable seat 110 may comprise an object holder for maintaining said object in a predefined position. Said object holder is for instance a belt maintaining system or a gripping system or a bicycle holder. Preferentially, said bicycle holder comprises a BHE 111 and a wheel receptacle or tray 112. The BHE 111 is configured for holding or clamping or maintaining the bicycle by one of its wheels, preferably the front wheel. It is typically a hook on which the wheel rim may rest. Said BHE 111 cooperates with the receptacle 112 for improving the bicycle's holding in said riding position. Said receptacle 112 may typically comprise a holding or guiding surface characterized by a U-shape cross-section for receiving the bicycle wheel between substantially straight (or flat) surfaces of said holding or guiding surface (i.e. for receiving the wheel in the middle of the "U", wherein the straight bars of the "U" are said holding or guiding surfaces - see in particular Fig. 1c). Said substantially flat surfaces aim to guide the wheel of the bicycle so that the latter keeps a riding position when hanging at or maintained by said BHE 111. Indeed, said BHE 111 and said receptacle 112 are configured for cooperating together for receiving and guiding the wheel of the bicycle, so that a safe hold is ensured.

As illustrated by Figures 1a and 1b, each foldable seat 110 according to the invention is characterized by two positions, namely said open position (Fig. 1a or Fig. 3), wherein the foldable seat 110 extends, according to its length, along an edge 121 of the table 120 (when the latter is in its horizontal position) to offer a seated position at said table 120, in particular one or two seating places 117, 118, depending on said length, and said closed position (see Fig. 1b or Fig. 4), wherein the foldable seat 110 is folded under the table 120 by rotation around the main axis AA' 130. Of course, if the system 100 according to the invention comprises more than one foldable seat, for instance two foldable seats, then each foldable seat might be put in the open or closed position independently from the position of the other foldable seat. This is shown in Fig. 5, wherein the left foldable seat is in the open position, while the right foldable seat is in the closed position for receiving and maintaining a bicycle. This enables a bike rider to seat at the table 120 while keeping the bike very close. Preferentially, the system 100 comprises a seat locking system configured for locking the foldable seat either in its closed position or in an open position. In particular, said seat locking system may define one or several intermediate positions between the open position and the closed position, so that the foldable seat might be open according to different angles with respect to the wall against which the system might be installed. Preferentially, said locking system is configured for releasing or unlocking the foldable seat from one of its positions by lifting up and rotating said foldable seat around said main axis.

As shown in Figures 1b and 1c, in the closed position, the object holder of the foldable seat 110 is easily accessible for hanging or maintaining an object. In the illustration of figure 1, said object holder is a bicycle holder comprising the BHE 111 and the receptacle 112, the latter being easily accessible for hanging a wheel 151, typically the front wheel, of a bicycle by means of the BHE 111 and having said bicycle maintained, notably in said riding state, via the cooperation of said BHE 111 with the receptacle 112. Indeed, the BHE 111 comprises or is typically a hook configured for partially surrounding the wheel rim and its tire, so that said rim be supported by said hook, while the tire rests within the receptacle 112, being laterally maintained by the flat surfaces of the holding surface of the receptacle 112, providing therefore guidance and maintenance for the bicycle according to a predefined position corresponding notably to said riding state.

Preferentially, each foldable seat 110 comprises a seating part 113 to be sat on and a pivotably mounted support member or frame 114 configured for supporting said seating part 113, wherein said support member or frame 114 is rotatably mounted around or connected to said main axis 130. In other words, said support member or frame 114 is configured for rotating around said main axis, which might be installed within a fixed part of the system, wherein said fixed part is configured for being fixed to the public transport, e.g. to the wall 160 and or floor 162 of the public transport. Said fixed part, which is for instance a rigid frame 170 (see for instance Fig. 3-5), which may have a shape of a plate, and which is configured for being fixed to the wall 160 and/or floor 162 of the public transport. Preferentially, said rigid frame 170 also supports the table 120, ensuring for instance the rigidity of the whole system 100. In particular, for each foldable seat 110 of the system 100, said rigid frame 170 may comprise an arm 171 extending laterally towards the concerned foldable seat, said arm comprising at its extremity towards the foldable seat said main axis, therefore supporting the foldable seat while ensuring its rotational movement around said main axis 130.

Preferentially, said support member or frame 114 of the foldable seat 110 extends longitudinally from a first extremity 115 towards a second extremity 116, its longitudinal extension being in particular horizontal and parallel to an edge of the table 120 when the foldable seat 110 is in the open position (see for instance the edge 121 in Fig. 1b and in Fig. 3 with respect to the foldable seat 110 on the left). As shown in Fig. 3, the support member or frame 114 may comprise two of said longitudinal extensions, an upper one supporting the seating part 113, and a lower one serving as a feet support 119 (see Fig. 1c and Fig. 3). Indeed and preferentially, the height H of the table 120 measured from the floor 162 of the public transport is greater than 100 cm, preferentially comprised between 90 cm ≤ H ≤ 120 cm so that for instance a bicycle wheel can be easily installed within the receptacle 112 while supported by the BHE.

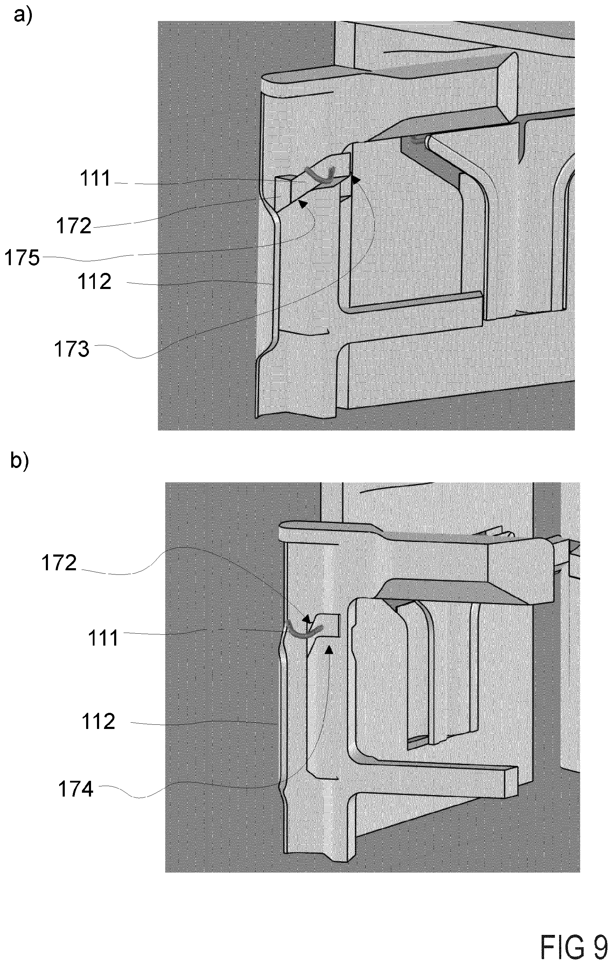

Preferentially, said arm 171 is configured for interacting with the BHE 111 in order to automatically pop it out when closing the foldable seat 110, i.e. when moving the foldable seat from its open position to its closed position. For this purpose, the arm 171 is for instance configured for pressing an automatic locking system 172, which, under the pressure of the arm 171 is configured for automatically freeing the BHE 111, which pops out from a nominal position within the frame 114. At the opposite, moving the foldable seat 110 in its open position is configured for bringing back the BHE from its "popped out" position to its nominal position, notably automatically locking the BHE 111 in its nominal position, and rearming by the same way the automatic locking system 172. Alternatively, the frame 114 may comprise a sliding element, having for instance the shape of a parallelepiped, said sliding element comprising a first extremity comprising the BHE 111 and a second extremity configured for contacting the arm 171 when opening the foldable seat 110, said sliding element being configured for sliding, e.g. freely sliding, notably in an opening of the frame 114, on a sliding surface 175 of said frame 114, wherein said sliding surface is inclined towards the arm 171 (i.e. so that by gravity said sliding element together with the BHE 111 would be driven into a motion towards the arm 171, the inclined surface being at a lower level close to the arm and at a higher level away of said arm), wherein, in the closed position of the foldable seat, said sliding element is in a nominal position that is at a bottom of said sliding surface, and, by opening the foldable seat, the arm 171 is configured for contacting said sliding element and pushing it upward on said sliding surface in order to reach the top of said sliding surface wherein the BHE is characterized by said popped-out position, which is preferentially locked by locking the foldable seat in its open position. The popped-out position 173 and the nominal position 174 of the BHE are illustrated respectively in Fig. 9a and 9b.

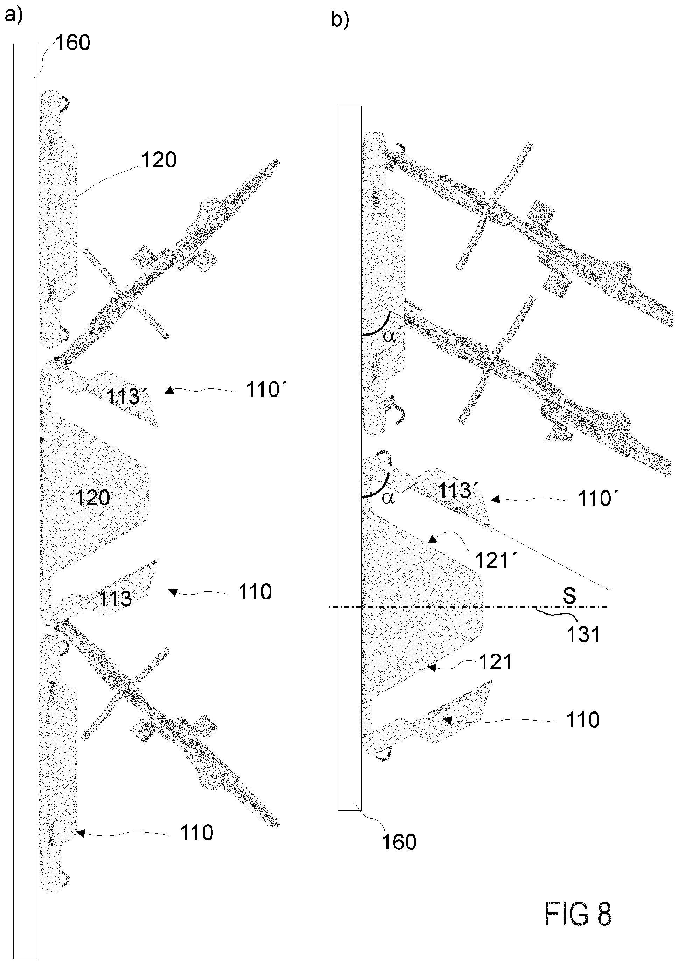

The first extremity 115 of the frame or support member 114 is preferentially rotatably mounted around said main axis 130 in order to enable a folding of the seating part 113 under the table 120 by rotation of said frame around said main axis 130. Said seating part 113 is preferentially installed between said first extremity 115 and said second extremity 116, wherein the latter is typically the part of the frame or support member 114 that is located the farthest from the main axis 130. At said second extremity 116, the seating part 113 might be characterized by a beveled shape (see for instance Fig. 3) so that when the foldable seat 110 is in the open position, a substantially flat surface - namely a beveled edge of the seating part 113 - be facing a corridor of the public transport. This enables a more comfortable moving of passengers in said corridor, notably between foldable seats that are facing each other in an open position, and also, it makes it possible to hang an additional bike on an additional BHE located between the foldable seat 110 and another foldable seat 110' when the latter are in their closed position, by freeing space for hanging a wheel of said additional bicycle to said additional BHE. The length L between the first extremity 115 and the second extremity 116 of the frame or support member 114 is typically 70 cm, preferentially comprised between 60 cm (suitable for a single seating place) ≤ L ≤ 150 cm (suitable for two seating places). The second extremity 116 is an extremity of the frame 114 that is moving from a first position under the table when the foldable seat is in the closed position to a second position located beside an edge (see for instance edge 121 in Fig. 3) of the table when the foldable seat is in its open position, while the first extremity is rotating around said main axis. The path described by the second extremity 116 when moving from the first position to the second position, and inversely, is preferentially a circular arc. Preferentially, the angle α between the closed position of the foldable seat 110 and its open position is equal to 60 degrees, and is preferentially comprised between 45 and 90 degrees. In particular, said angle α is configured for defining an open position of the foldable seat 110 that is substantially parallel, according to its length, to a bicycle hanging on a BHE of a next system according to the invention. This is better illustrated in Figure 8b, wherein the angle α between the foldable seat 110 and the wall 160 is substantially equal to the angle a' defined by the bicycle with respect to said wall 160 of the public transport.

According to the present invention, the seating part 113 might be configured for comprising one or several seating places, preferentially two seating places 117 and 118 as illustrated in Fig. 1. Said seating places are typically distributed along the length of said member or frame 114, for instance one next to the other.

Preferentially, said support member or frame 114 comprises said object holder according to the invention. For instance, it comprises the BHE 111 and receptacle 112, and optionally, said locking system 172 for automatically freeing the BHE, i.e. moving it from a nominal position to a "popped-out" position, when closing the foldable seat 110 and inversely. Preferentially, the receptacle 112 is a part of the frame 114 as better illustrated in Fig. 3-5. Preferentially, said receptacle 112 is installed next to the main axis 130, extending for instance vertically according to its length along said main axis 130, while the BHE 111 is configured for cooperating with the receptacle 112 for enabling an insertion of the wheel of the bicycle within said receptacle 112. Optionally, said support member or frame 114 may comprise another object holder. For instance, it can comprise another BHE 111 and another receptacle 112. For instance, a first BHE and receptacle are installed on said support member or frame 114 next to the first extremity 115, and a second BHE and receptacle are installed next to the second extremity 116, as shown in Fig. 1, each enabling to hold a bicycle.

Preferentially, the system 100 according to the invention comprises two of said foldable seats. Therefore, in addition to the foldable seat 110 presented in Fig. 1 and in Fig. 3, said system 100 may comprise another foldable seat 110' as illustrated in Figures 3-5. Said another foldable seat 110' has the same function and features as the foldable seat 110 of Fig. 1: it is foldable under the table 120 by rotation around another main axis of rotation, which can be installed on the other side of the table 120 with respect to the rotation axis 130. Said another foldable seat 110' may comprise another object holder (e.g. belt maintaining system, or bicycle holder, or ski/snowboard holder, etc.). For instance, said another foldable seat may comprise another bicycle holder, which comprises another BHE 111' and another wheel receptacle or tray 112', preferentially extending vertically, wherein said another BHE 111' and said another receptacle 112' are configured for cooperating together for receiving and guiding a wheel of another bicycle. Said another foldable seat 110' is characterized by two positions, namely an open position and a closed position, wherein in the closed position, said another seat is folded under the table 120 and configured for providing access to said another object holder. For instance, the folded position of said another foldable seat 110' is configured for providing access to said another BHE 111' and wheel receptacle 112' for maintaining said another bicycle by one of its wheels preferably in a riding state. In its open position, said another foldable seat 110' extends along another edge 121' of the table 120 (of course, when the latter is in its horizontal position) to offer another seated position at said table 120. Preferentially, said edge 121 and said another edge 121' are opposite edges of the table 120 as illustrated in Fig. 3. In particular, the angle between said main axis or said another main axis and the table, i.e. the plane defined by said table 120, when the latter is in its horizontal position is different from 0°. In other words, said main axis, as well as said another main axis, are not parallel to the table when it is in its horizontal position, but might be parallel to the table when it is in its vertical position (high position). Contrary to known in the art foldable seats, the foldable seat 110, 110' according to the invention is preferentially free of any a tip-up motion when moving from the open position to the closed position.

Therefore, the system 100 according to the invention may preferentially comprise two foldable seats, each equipped with the BHE and receptacle according to the invention. Said foldable seat and said another foldable seat according to the invention are preferably arranged on either side of the table 120, each providing, via their respective object holder, e.g. via their respective BHE and receptacle, means for holding an object, like a bicycle. Each of said foldables seats comprises then said pivotably mounted support member or frame which is configured for supporting a seating part that may offer one or two seating places. In particular, the respective support members or frames of the foldable seats equipping a same system according to the invention need to rotate in opposite direction when moving from the open position to the closed position in order to ensure that both said foldable seat 110 and said another foldable seat 110' reach said closed position underneath the table 120 when they are in the closed position.

Thus, for each foldable seat according to the invention, the object holder, e.g. the bicycle holder comprising said BHE and said receptacle, is installed on said support member or frame that is a pivotably or rotatably mounted support member configured for pivoting or rotating around said main axis of rotation. As shown in Fig. 3, each foldable seat rotates around its own main axis of rotation, which are preferentially each a vertical axis of rotation, wherein the respective axis of rotation of the foldable seats are preferentially located symmetrically on each side of the table 120. Indeed and preferentially, the system 100 according to the invention is symmetric with respect to a plane of symmetry S 131 (see for instance Fig. 8b) that is perpendicular to the table 120 when the latter is in its horizontal position, and passes preferentially through the middle of said table 120 with respect to its breadth, extending according to the table length. Typically, said plane of symmetry S extends perpendicularly to a wall of the public transport against which the system according to the invention is configured for being installed. The length of the table is typically measured from the wall of the public transport, extending therefore perpendicularly to the wall 160 when the system according to the invention is installed in the public transport. The rigid frame 170 is for instance symmetric with respect to said plane of symmetry S. As well, the foldable seat 110 and said another foldable seat 110' are preferentially symmetrically installed with respect to said plane of symmetry S 131, so that the geometry and disposition of one is mirroring the geometry and disposition of the other one with respect to said plane of symmetry S 131. Preferentially, the table 120 has a triangular, or rectangular, or isosceles trapezoid, or right trapezoid shape, which notably enables to implement the previously described symmetric arrangement of the system according to the invention.

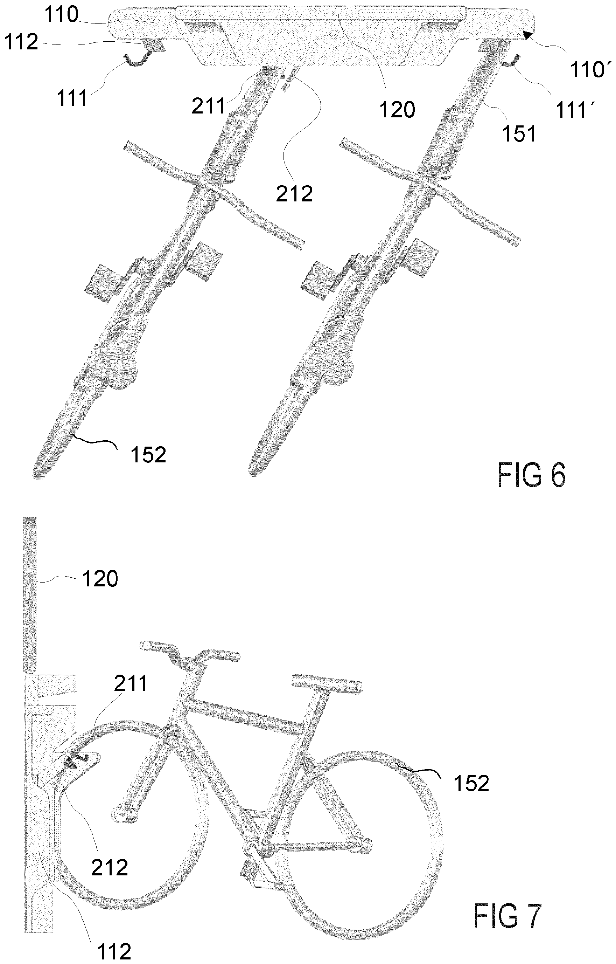

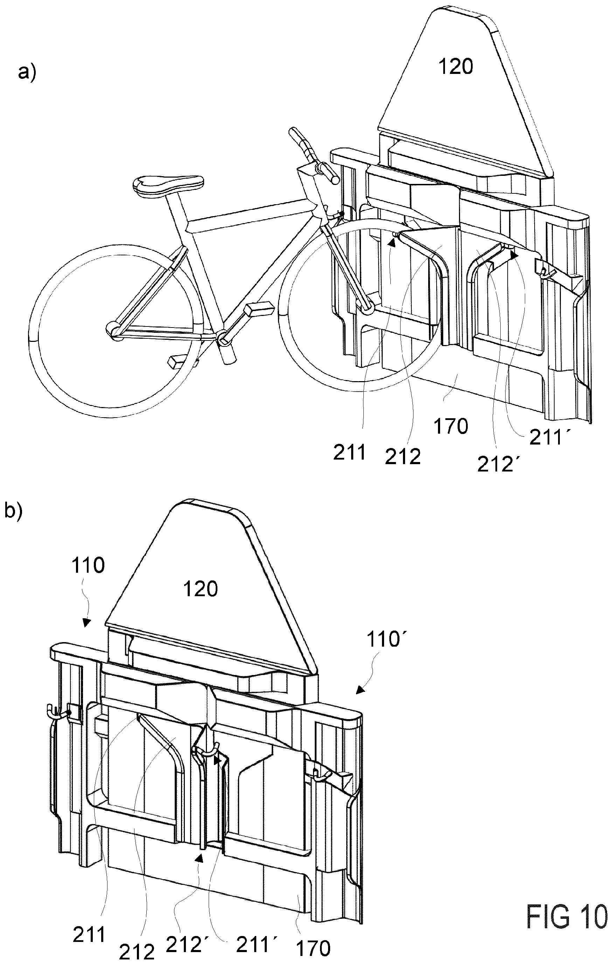

Preferentially, apart from the object holder comprised within or installed on each foldable seat according to the invention, the system 100 may further comprise at least one additional object holder installed under the table 120, for instance on said rigid frame 170. For instance, in addition to the BHE and the receptacle comprised within or installed on each foldable seat according to the invention, the system 100 may further comprise at least one additional BHE 211 and at least one additional receptacle 212 installed under the table 120 and cooperating together for receiving and guiding a wheel of an additional bicycle 152 (see in particular Fig. 6 and 7, and Fig. 10). Said additional BHE 211 and additional receptacle 222 might be typically mounted on said rigid frame 170 as shown in Fig. 10b. In particular, said additional BHE 211 and additional receptacle 212 might be supported by a rotatable structure configured for pivoting from a closed position to an open position. Said pivoting might be realized for instance manually by a passenger. In particular, the rotatable structure is configured for being blocked in its open position by the seat in its closed position, so that for the rotatable structure to return to the closed position, the foldable seat has to be slightly open to free a space or passage enabling the rotatable structure to move from the open position to the closed one, said passage being occupied by the foldable seat when the latter is in the closed position. Alternatively, said pivoting might be triggered by moving a foldable seat, wherein moving the foldable seat from its open position to its closed position is configured for moving the rotatable structure from its closed position to its open position, and inversely, moving the foldable seat from the closed position to the open position is preferentially configured for automatically moving the rotatable structure from the open position to the closed position. For this purpose, the rotation of the foldable seat around the main axis 130 is preferentially mechanically coupled to the rotation of the rotatable structure. Therefore and advantageously, the folding of the foldable seat 110 under the table 120 is configured for automatically pivoting the rotatable structure from its closed position to its open position, automatically freeing thus the access to said additional receptacle 212 and BHE 211. In particular, in the closed position, the additional receptacle 212 is covering the additional BHE 211, preventing contact with a seating passenger, and also preventing hanging a bicycle to said additional BHE 211. Therefore, the additional BHE 211 is preferentially only accessible in the open position for hanging an additional bicycle by its wheel, wherein said additional BHE 211 together with the additional receptacle 212 enable to guide and maintain the additional bicycle in a predefined position that corresponds preferably to said riding state of the bicycle.

Figure 2 schematically summarizes the method (200) according to the invention. Said method comprises:
- at step 210, moving or folding the foldable seat 110, by rotation around the main axis 130 of rotation, from an open position, wherein the foldable seat 110 extends along an edge 121 of the table 120 in order to offer a seated position at said table 120, to a closed position, wherein said foldable seat 110 is located under said table 120 for freeing a space, notably for providing access to an object holder. Preferentially, said closed position is configured for freeing space to a bicycle and providing access to a BHE 111 and a wheel receptacle 112 for maintaining said bicycle by one of its wheels;
- at step 220, and optionally, hanging or maintaining an object by means of said object holder. For instance, a bicycle might be maintained by the system according to the invention by inserting one of its wheels, preferentially the front wheel, in the BHE 111, for instance by passing the wheel through a hook of the BHE 111 so that the rim of the wheel be supported by said hook, and wherein the tire of the wheel is maintained and guided by the receptacle 112. In case of an embodiment according to Fig. 5, the passenger, e.g. a bike rider, can then comfortably seat on the other foldable seat.

While most of the features of Figures 3-10 have already been tackled in connection with the description of the concept of the invention presented above, further details are provided in the following. Figures 3-5 present a preferred embodiment of the system according to the invention. In Figure 3, the system 100 is shown in a fully open position, i.e. both the foldable seat 110 and said another foldable seat 110' are in the open position. In Figure 4, the same system 100 is presented with both foldable seats being in the closed position. While figure 4 presents the table 120 lifted or raised in a high position (a substantially vertical position) obtained by rotation of the table 120 around its horizontal axis of rotation, said table 120 might also be maintained in its horizontal position when an object, e.g. a bicycle, needs to be hold by the system according to the invention. Preferentially, the free space between the bottom of the table 120 and the floor 162 is sufficient for easily hanging a bicycle. Preferentially, said table 120 is fixed to the rigid frame 170, so that only the rigid frame needs to be fixed to the public transport for ensuring a use of the system according to the invention by passengers. Finally, Figure 5 shows an embodiment of the system, wherein one of the foldable seats is in the open position and the other one in a closed position. This enables for instance a bike rider to comfortably sit at the table while keeping an eye on her or his bicycle.

Figures 6 and 7 present respectively a top view and a side view of the preferred embodiment of the system 100 according to Figures 3-5. Said system 100 comprises two foldable seats, wherein both are illustrated in the closed position in Figures 6-7. As it can be seen, the system 100 enables to hold at least two bicycles. Indeed, a foldable seat 110 and another foldable seat 110' of the system are equipped respectively with a BHE 111 and another BHE 111' cooperating with a receptacle 112 and respectively another receptacle 112'. Additionally, the system comprises, rotatably fixed to the rigid frame 170, an additional receptacle 212 and BHE 211, and another additional receptacle and BHE (see for instance ref. 211' and 212' in Fig. 10). This enables to hang at least two bicycles per system according to the invention.

This is better illustrated by Fig. 8, wherein several systems according to the invention are installed the one next to the other, for instance fixed to a same wall 160 of the public transport. Preferentially, each table is facing a window of the public transport, the breadth of the system being for instance substantially equal to the breadth of the window of the public transport. The foldable seats of the different systems shown in Figure 8 might be independently put in the open position or closed position. In particular, each system according to the invention may maintain two bicycles when both its foldable seats 110 and 110' are in the closed position, as well as in the situation where both said foldable seats 110 and 110' are in their open position. Indeed, each of said systems comprises preferentially two foldable seats, namely a foldable seat 110 and another foldable seat 110', as well as said additional BHE and receptacle, and said another additional BHE and receptacle. This enables for instance the system to hang two bicycles, when, according to a first case, both foldable seats are in the closed position, one bicycle hanging to the BHE of one of the foldable seats, and an additional bicycle hanging to one of said additional BHE (see Fig. 8b), as well as two bicycles when, according to a second case, both foldable seats are in the open position, each foldable seat maintaining one of said bicycles by means of its BHE (see Fig. 8a). In the first case, the bicycles are maintained parallel to each other, typically parallel to one of the edges 121 or 121' of the table 120, while in the second case, each bicycle defines typically a 60 degree angle with the edge (121 or 121') that is the closest to the considered bicycle, said angle varying between a maximum wherein the bicycle is parallel to the wall and a minimum wherein it is parallel to said closest edge of the table 120.

Figure 9 presents a preferred embodiment of the BHE 111 and receptacle 112 according to the invention for a foldable seat in closed position (Fig. 9a) and in open position (Fig. 9b). As explained earlier, the foldable seat may comprise an automatic locking system 172 configured for interacting with an arm of the rigid frame, e.g. by being mechanically coupled to said arm, wherein said locking system 172 is configured for automatically releasing the BHE 111 when the foldable seat is moved from its open position to its closed position, the BHE being then in the so-called "popped-out" position, and wherein said locking system is further configured for automatically putting in a nominal position when the foldable seat is moved from the closed position to the open position. Preferentially, in its nominal position, the BHE 111 is at least partially installed within the frame or support member of the foldable seat, while in its popped-out (or extended) position, said BHE extends away from said frame or support member, wherein the motion from the nominal to popped-out position is notably realized by sliding a sliding element supporting the BHE on a sliding surface 175. In particular, the cooperation of the BHE 111 with the receptacle 112 is configured for defining two different riding positions for the bicycle depending on the position (nominal or popped-out) of the BHE 111: if the BHE 111 is in its nominal position, i.e. the foldable seat is open, then a bicycle hold by said BHE has a riding position aligned with a first direction which describes said angle of typically 60° with the table edge that is the closest to the bicycle, and if the BHE 111 is in its popped out position, i.e. the foldable seat is closed, then a bicycle hold by said BHE has a riding position aligned with a second direction which is parallel to one of the edges of the table (see Fig. 8a and 8b).

Figure 10 presents details regarding said additional BHE and additional receptacle according to the invention, which are, in Fig. 10a, in operation hanging a bicycle, and, in Fig. 10b, in a state free of any bicycle. Preferentially, if the system according to the invention comprises two foldable seats, then it comprises also two of said additional BHE and receptacle. Typically, on the left side of the system when facing it, the system may comprise a foldable seat 110 rotatably fixed to the rigid frame 170, and an additional BHE 211 and additional receptacle 212 both mounted on said rotatable structure fixed to said rigid frame, and on the right side of the system, notably symmetrically mounted with respect to the foldable seat 110 and additional receptacle 212 and BHE 211, another foldable seat 110' rotatably fixed to the rigid frame 170, and another additional BHE 211' and another additional receptacle 212' both mounted on another rotatable structure fixed to said rigid frame 170. In such a case, the foldable seat 110 (i.e. the left seat) preferentially cooperates with said another rotatable structure (i.e. the right rotatable structure), being for instance mechanically coupled to the latter, so that a rotation of the foldable seat 110 around its main axis 130 from the open position to the closed position is configured for pivoting the rotatable structure from the closed position to its open position, and inversely. This applies mutatis mutandis to the other foldable seat 110' (i.e. the right seat) with respect to the rotatable structure (i.e. the left rotatable structure). Finally, each of said additional receptacle (e.g. 212 or 212') might comprise a protection surface, for instance having the shape of an inverted "L", which is configured for covering the additional BHE (i.e. 211 or respectively 211') in the closed position, said protection surface fitting an opening in the rigid frame 170 wherein the BHE is located when the rotatable structure is in the closed position.

To conclude, the present invention proposes a modular system and method based on a new folding process for folding seats within a public transport so that a space can easily be created or generated for objects carried by passengers, e.g. for hanging bicycles. The present invention optimizes the available space in function of needs of the passengers, and provides notably, when adapted for carrying bicycles, a higher density of bicycles in riding position when foldable seats are in their closed position, while being easily adjustable by passengers for satisfying a need to sit.

## Claims

1. System (100) configured for being installed in a public transport, said system (100) comprising:
- a foldable seat (110);
- a table (120);
**characterized in that**
- the foldable seat (110) is foldable under the table (120) by rotation around a main axis (130) of rotation, said foldable seat (120) being **characterized by** two positions, namely an open position and a closed position, wherein in the closed position, the foldable seat (110) is folded under the table (120), and in its open position, the foldable seat (110) is configured for extending along an edge (121) of the table (120) to offer a seated position at said table (120).

2. System (100) according to claim 1, wherein the table (120) is foldable by rotation around a horizontal axis.

3. System (100) according to claim 1 or 2, wherein the foldable seat (110) comprises a seating part (113) to be sat on and a pivotably mounted support member (114) configured for supporting said seating part (113), said member (114) extending longitudinally from a first extremity (115) towards a second extremity (116), wherein said first extremity (115) is rotatably connected to said main axis (130) in order to enable a folding of the seating part (113) under the table (120), and wherein said seating part (113) is installed between said first extremity (115) and said second extremity (116).

4. System (100) according to claim 3, wherein said seating part (113) is configured for offering one or two seating places (117, 118).

5. System (100) according to one of the claims 1 to 4,
wherein the foldable seat (110) comprises an object holder for holding or maintaining an object in said public transport.

6. System (100) according to claim 5, wherein said object holder is a bicycle holder configured for hanging a bicycle in said public transport, said bicycle holder comprising a bicycle holding element - hereafter "BHE" - (111) and a wheel receptacle (112) configured for cooperating together for receiving and guiding a wheel (151) of the bicycle, and wherein in the closed position, the foldable seat (110) folded under the table (120) is configured for providing access to the BHE (111) and wheel receptacle (112) for maintaining the bicycle by one of its wheels (151).

7. System (100) according to claim 6 and claim 3 or 4,
wherein said support member (114) comprises the BHE (111) and the receptacle (112).

8. System (100) according to one of the claims 1 to 7, comprising another foldable seat (110'), wherein said another foldable seat (110') is foldable under the table (120) by rotation around another main axis of rotation, and is **characterized by** two positions, namely an open position and a closed position, wherein in the closed position, said another seat (110') is folded under the table (120), and in its open position, said another foldable seat (110') extends along another edge (121') of the table (120) to offer another seated position at said table (120).

9. System (100) according to claim 8, wherein said system (100) is symmetric with respect to a plane of symmetry S (131) that is perpendicular to the table (120) and passes through the middle of the latter, and wherein said foldable seat (110) and said another foldable seat (110') are symmetrically installed with respect to said plane of symmetry S (131).

10. System (100) according to claim 8 or 9, wherein said another foldable seat (110') comprises another BHE (111') and another wheel receptacle (112') configured for cooperating together for receiving and guiding a wheel of another bicycle, wherein, in the closed position, said another seat (110') folded under the table (120) is configured for providing access to said another BHE (111') and wheel receptacle (112') for maintaining said another bicycle by one of its wheels.

11. System (100) according to one of the claims 1-10, comprising at least one additional BHE (211) and at least one additional receptacle (212) installed under the table (120) and cooperating together for receiving and guiding a wheel of an additional bicycle (152).

12. System (100) according to claim 11, wherein said additional BHE (211) and additional receptacle (212) are supported by a rotatable structure configured for pivoting from a closed position to an open position when the foldable seat is pivoted from its open position to its closed position, and inversely, wherein in the closed position, said additional receptacle (212) is configured for covering said additional BHE (211) to prevent contact with a seating passenger, and wherein in the open position, said additional BHE (211) and additional receptacle (212) are accessible for hanging the additional bike (152).

13. System (100) according to claim 12, wherein folding the foldable seat (110) under the table (120) is configured for automatically pivoting the rotatable structure from its closed position to its open position.

14. Public transport comprising a system according to one of the claims 1 to 13, said system being installed against a wall of said public transport.

15. Method (200) for freeing, by means of a system (100), a space in a public transport, said system (100) comprising at least one foldable seat (110) and a table (120), the method comprising:
- folding (201) the foldable seat (110), by rotation around a main axis (130) of rotation, from an open position, wherein the foldable seat (110) extends along an edge (121) of the table (120) in order to offer a seated position at said table (120), to a closed position, wherein said foldable seat (110) is located under said table (120) for freeing said space.
